# EUROPEAN PATENT APPLICATION

(11) **EP 1 624 513 A1**
(43) Date of publication of application: **08.02.2006**
(21) Application number: 04723078.4
(22) Date of filing: 24.03.2004
(51) Int. Cl.: H01M 8/02, H01M 8/10, H01M 4/86

(54) **FUEL CELL AND METHOD FOR PRODUCING SAME**

(30) Priority: 09.04.2003 JP 2003105626
(71) Applicant: NEC CORPORATION, Minato-ku, Tokyo 108-8001 (JP); Mitsui Chemicals, Inc., Tokyo 105-7117 (JP)
(72) Inventor: OBATA, Takeshi, Tokyo 1088001 (JP); NAKAMURA, Shin, Tokyo 1088001 (JP); YOSHITAKE, Tsutomu, Tokyo-1088001 (JP); KUBO, Yoshimi, Tokyo 1088001 (JP); OMI, Takehiko, Sodegaura-shi, Chiba 299-0265 (JP); TAMAI, Shoji, Sodegaura-shi, Chiba 299-0265 (JP); KUROKI, Takashi, c/o Mitsui Chemicals Inc., Minato-ku, Tokyo 105-7117 (JP); IKADO, Shuhei, Sodegaura-shi, Chiba 299-0265 (JP)
(74) Representative: HOFFMANN EITLE
(86) International application number: PCT/JP2004/004125
(87) International publication number: WO 2004/091027

(57) **Abstract**

An intermediate layer (161) is provided between a catalyst layer (112) and a solid polymer electrolyte membrane (114). The intermediate layer (161) includes a protonic acid group-containing aromatic polyether ketone and catalyst particles.

## Description

### Technical Field

The present invention relates to a fuel cell and a method for manufacturing same.

### Background Art

A polymer electrolyte fuel cell is a device that is formed from a polymer electrolyte membrane made of an ionically conductive resin, and a fuel electrode and an oxidant electrode sandwiching the polymer electrolyte membrane, and generates electricity by an electrochemical reaction by supplying hydrogen to the fuel electrode and oxygen to the oxidant electrode. The fuel electrode and the oxidant electrode are usually formed by coating a porous base member such as a carbon paper with a mixture of an ionically conductive resin and catalyst material-supporting carbon particles. A fuel cell is obtained by sandwiching the polymer electrolyte membrane between these electrodes and subjecting them to thermocompression bonding.

Fuel supplied to the fuel electrode passes through pores in the electrode, reaches the catalyst, and releases electrons to become protons. The electrons thus released are drawn to an external circuit through the carbon particles within the fuel electrode and the solid electrolyte, and flow into the oxidant electrode from the external circuit. On the other hand, the protons generated in the fuel electrode reach the oxidant electrode via the ionically conductive resin of the fuel electrode and the solid polymer electrolyte membrane, and react with oxygen supplied to the oxidant electrode and electrons that have flowed in from the external circuit, thus forming water. As a result, the electrons flow from the fuel electrode to the oxidant electrode in the external circuit, thus extracting electric power.

In order to improve the characteristics of such a fuel cell, it is important to improve the adhesion at the interface between each electrode and the solid polymer electrolyte membrane. When the interfacial adhesion is poor, the ability to conduct protons generated by an electrode reaction is degraded, and the electrical resistance consequently increases, thus causing a decrease in cell efficiency.

In recent years alternatives to the ionically conductive resin forming the polymer electrolyte membrane have been investigated. As a polymer electrolyte membrane material, conventionally a sulfonic acid group-containing perfluorocarbon polymer compound (e.g. Nafion (product name) manufactured by DuPont) is generally used. However, since this resin is expensive, other inexpensive resins as alternatives thereto have been investigated. Furthermore, particularly when designing a direct methanol type fuel cell (DMFC), from the viewpoint of suppressing methanol crossover, a non-fluorine type ionically conductive resin has been investigated as an alternative thereto.

However, when these membranes are used, in general the adhesion with the fuel electrode and the oxidant electrode tends to be degraded. In particular, with regard to a catalyst layer on the electrode surface that is in contact with the polymer electrolyte membrane, since it is a requirement that fuel is moved efficiently from the electrode layer in order to supply a large amount of protons, it is often desirable to use the above-mentioned sulfonic acid group-containing perfluorocarbon polymer compound for constitution; in such cases the polymer electrolyte membrane and the electrode catalyst layer are formed from different types of materials, and the adhesion between the two is significantly degraded.

Japanese Patent Application Laid-open No. 2002-298867 describes a technique for improving the adhesion between such a polymer electrolyte membrane and an electrode. This publication describes a polymer electrolyte fuel cell comprising, between a polymer electrolyte membrane and an electrode catalyst layer, a buffer layer formed from an ionically conductive material whose dynamic viscoelastic coefficient at 110 degree C is smaller than that of the polymer electrolyte membrane but larger than an ionically conductive polymer binder of the catalyst layer. As described in paragraph 0008 of the Specification of this publication, since the dynamic viscoelastic coefficient is used as a hardness index, the intention of the above-mentioned fuel cell is to provide, between the polymer electrolyte membrane and the electrode catalyst, a buffer layer having a hardness that is intermediate between the hardnesses thereof.

However, it is difficult to solve the problem of the adhesion deteriorating during long-term use by means of the technique described in Japanese Patent Application Laid-open No. 2002-298867. In a DMFC in particular, the adhesion of the electrode-polymer electrolyte membrane interface tends to be degraded due to an electrolyte material being swelled by methanol when the fuel cell is used repeatedly, and it is difficult to solve such a problem by means of the above-mentioned constitution. Furthermore, because the buffer layer is present, it acts as a resistor and causes an increase in the internal resistance of the cell, thus causing a loss in output, and on this point there is still room for improvement.

### DISCLOSURE OF INVENTION

The present invention has been accomplished under the above-mentioned circumstances, and it is an object thereof to improve adhesion at the interface between a diffusion electrode and a solid polymer electrolyte membrane and enhance cell characteristics and cell reliability.

In accordance with the present invention, there is provided a fuel cell comprising a polymer electrolyte membrane and a pair of diffusion electrodes sandwiching the polymer electrolyte membrane, wherein the polymer electrolyte membrane comprises a first resin, the diffusion electrodes have a porous base member and a catalyst layer comprising a catalyst and a second resin having a protonic acid group, the catalyst layer being formed so as to be in contact with the porous base member, and an intermediate layer is provided between the polymer electrolyte membrane and at least one of the diffusion electrodes, the intermediate layer comprising a third resin and catalyst particles, and the third resin comprising a protonic acid group-containing crosslinked polymer having an aromatic unit.

Furthermore, in accordance with the present invention, there is provided a fuel cell comprising a polymer electrolyte membrane and a pair of diffusion electrodes sandwiching the polymer electrolyte membrane, wherein the polymer electrolyte membrane comprises a first resin, the diffusion electrodes have a porous base member and a catalyst layer comprising a catalyst and a second resin having a protonic acid group, the catalyst layer being formed so as to be in contact with the porous base member, and an intermediate layer is provided between the polymer electrolyte membrane and at least one of the diffusion electrodes, the intermediate layer comprising a third resin and catalyst particles, and the third resin comprising a protonic acid group-containing aromatic polyether ketone.

Moreover, in accordance with the present invention, there is provided a fuel cell comprising a polymer electrolyte membrane and a pair of diffusion electrodes sandwiching the polymer electrolyte membrane, wherein the polymer electrolyte membrane comprises a first resin, the diffusion electrodes have a porous base member and a catalyst layer comprising a catalyst and a second resin having a protonic acid group, the catalyst layer being formed so as to be in contact with the porous base member, and an intermediate layer is provided between the polymer electrolyte membrane and at least one of the diffusion electrodes, the intermediate layer comprising a third resin and catalyst particles, and the first resin being a resin formed by crosslinking a protonic acid group-containing aromatic polyether ketone resin.

Furthermore, in accordance with the present invention, there is provided a method for manufacturing a fuel cell, the method comprising a step of arranging, on opposite surfaces of a polymer electrolyte membrane comprising a first resin, a pair of diffusion electrodes comprising a porous base member and a catalyst layer comprising a catalyst and a second resin having a protonic acid group, the catalyst layer being formed so as to be in contact with the porous base member, and applying pressure or heat in this state so as to unite the diffusion electrodes and the polymer electrolyte membrane, wherein, prior to the above-mentioned step, at least one surface of the polymer electrolyte membrane is coated with a coating solution comprising catalyst particles and a third resin comprising a protonic acid group-containing crosslinkable aromatic polyether ketone.

In this production method, it may be arranged such that, after the coating solution is applied, the third resin is crosslinked by heating or irradiation with electromagnetic waves. In this case, the crosslinking may be effected by heating used for uniting the diffusion electrodes and the polymer electrolyte membrane, or the crosslinking may be effected by providing a separate heating step and the like from the above heating. Furthermore, the coating solution may include the above-mentioned second resin. The second resin is, for example, a sulfonic acid group-containing perfluorocarbon polymer compound. Moreover, the above-mentioned step of applying the coating solution may include a step of applying a plurality of coating solutions having different contents of the third resin.

In accordance with the present invention, since there is provided the intermediate layer comprising catalyst particles and the resin having the above-mentioned specified structure, the interfacial adhesion between the diffusion electrode and the polymer electrolyte membrane is improved, and good proton conductivity at this interface can be realized.

Furthermore, in accordance with the present invention, since there is provided the intermediate layer having a resin composition that is designed independently of the polymer electrolyte membrane and the diffusion electrodes, a fuel cell having an excellent balance between adhesion and proton conductivity can be obtained. Although it might be expected that the problems with adhesion and the like could be solved by optimizing the resin constitution of the diffusion electrodes or the polymer electrolyte membrane, since there are restrictions on the material characteristics required for these constituent members, there is a certain limit to the improvement effect. On the other hand, in accordance with the present invention, since the intermediate layer can be designed without taking into consideration the characteristics required for the diffusion electrodes and the polymer electrolyte membrane, the degree of freedom in its design is high, and the adhesion, the proton conductivity and the like can be improved markedly, depending on the intended purpose. In particular, when applied to a direct methanol type fuel cell, it is possible to achieve a balance between methanol crossover inhibition performance and good proton conductivity, which is conventionally difficult. This is because the intermediate layer includes a catalyst, the intermediate layer itself consumes methanol and, moreover, the resin forming the intermediate layer has excellent proton conductivity.

It is not necessary for the intermediate layer in the present invention to be formed over the whole area of the face between the polymer electrolyte membrane and the diffusion electrode, and it may be formed on at least one section therebetween. Furthermore, the intermediate layer includes catalyst particles, and the content of the catalyst particles in the layer may have a distribution along a direction from the diffusion electrode to the polymer electrolyte membrane. For example, the intermediate layer may contain no catalyst particles on the side on which it is in contact with the polymer electrolyte membrane but may contain the catalyst particles on the side on which it is in contact with the diffusion electrode.

Furthermore, since the resin forming the above-mentioned intermediate layer has the ability to bind the catalyst particles sufficiently, transfer of protons via the intermediate layer is carried out smoothly. Furthermore, when the catalyst particles are formed from conductive particles and a metal catalyst supported on the conductive particles, due to the action of the above-mentioned intermediate layer-forming resin electrical contact between the conductive particles is exhibited well, the conductivity of the intermediate layer is good, and the adhesion between the polymer electrolyte membrane and the diffusion electrode can be enhanced while suppressing any increase in the internal resistance of the fuel cell.

Such an ability to bind particles is particularly markedly exhibited when a resin having the above-mentioned specified structure is employed as the resin forming the intermediate layer.

In the present invention, an arrangement is possible in which organic liquid fuel is supplied to the above-mentioned catalyst electrode. That is, a so-called direct type fuel cell is possible. As the organic liquid fuel, for example, methanol can be used. Although the direct type fuel cell has the advantages that the cell efficiency is high, space can be saved since it is unnecessary to employ a reformer, there is the problem of crossover of an organic liquid fuel such as methanol. In accordance with the present invention, it is possible to realize good cell efficiency in a stable manner over a long period of time by suppressing any increase in the electrical resistance at the interface between the catalyst electrode and the solid polymer electrolyte membrane while solving the problem of crossover.

In the present invention, the third resin may be a crosslinkable resin. Furthermore, the third resin may be a crosslinked resin. The 'crosslinked resin' referred to here means a resin formed by crosslinking at least a part of a crosslinkable resin.

In the present invention, the third resin may be a protonic acid group-containing aromatic polyether ketone. The 'protonic acid group-containing aromatic polyether ketone' referred to here means an aromatic resin having, in a repeating unit, a carbonyl bond, an ether bond, and a protonic acid group.

Furthermore, the third resin may have a constitution containing a repeating structural unit represented by Formula (1) below and a repeating structural unit represented by Formula (2) below. 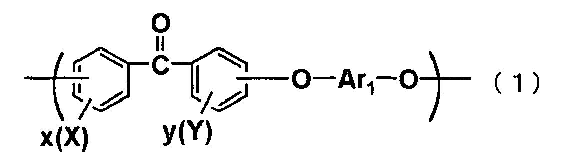 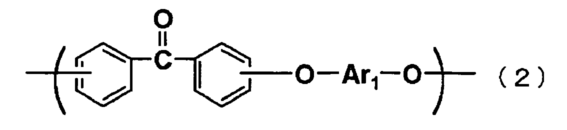 (In Formulae (1) and (2), each Ar₁ independently denotes a divalent group containing an aromatic ring. A straight-chain or branched-chain alkyl group having 1 to 20 carbon atoms is directly bonded to at least one of the aromatic rings. A hydrogen of the aromatic ring may be substituted by an alkyl group, a halogenated hydrocarbon group, or a halogen. X and Y each denote a protonic acid group selected from a sulfonic acid group, a carboxylic acid group, a phosphoric acid group, or a sulfonimide group, or a metal salt thereof. x and y are integers of 0 or higher, and x + y is 1 or higher.)

In the present invention, if as the first resin, a resin having the same structure as that of the third resin is used, the adhesion at the interface between the diffusion electrode and the solid polymer electrolyte membrane can be further improved, thereby enabling the cell characteristics to be further improved. Specifically, as the first resin, a resin formed by crosslinking a protonic acid group-containing crosslinkable aromatic polyether ketone can be used and, for example, it may have a constitution containing a repeating structural unit represented by Formula (1) below and a repeating structural unit represented by Formula (2) below. 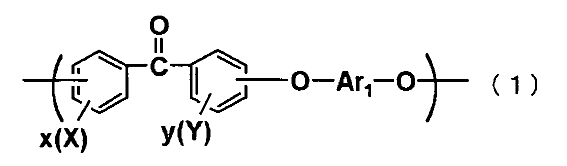 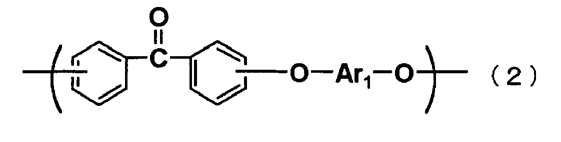 (In Formulae (1) and (2), each Ar₁ independently denotes a divalent group containing an aromatic ring. A straight-chain or branched-chain alkyl group having 1 to 20 carbon atoms is directly bonded to at least one of the aromatic rings. Hydrogen of the aromatic ring may be substituted by an alkyl group, a halogenated hydrocarbon group, or a halogen. X and Y each denote a protonic acid group selected from a sulfonic acid group, a carboxylic acid group, a phosphoric acid group, or a sulfonimide group, or a metal salt thereof. x and y are integers of 0 or higher, and x + y is 1 or higher.)

In the present invention, the intermediate layer may further contain the second resin. The second resin may be, for example, a sulfonic acid group-containing perfluorocarbon polymer compound.

In the present invention, it may be arranged such that the content of the third resin on the side of the intermediate layer that is in contact with the polymer electrolyte membrane is higher than the content of the third resin on the side of the intermediate layer that is in contact with the diffusion electrode.

In the present invention, it may be arranged such that the catalyst particles contained in the intermediate layer comprise conductive particles and a metal catalyst supported on the conductive particles.

In the present invention, it may be arranged such that methanol fuel is supplied to one of the diffusion electrodes.

The resin content or the catalyst content in the present invention may be measured by, for example, a method in which secondary ion mass spectrometry (SIMS) is carried out while carrying out sputtering from the surface of a layer structure that is a measurement target.

In accordance with the present invention, it is possible to enhance the adhesion at the interface between the diffusion electrode and the solid polymer electrolyte membrane, and improve the cell characteristics and the cell reliability.

### BRIEF DESCRIPTION OF THE DRAWINGS

The above-mentioned object, other objects, characteristics, and advantages will become more apparent from a preferred embodiment described below and drawings below accompanying this embodiment.
FIG. 1 is a diagram showing an arrangement of a fuel cell related to an embodiment.
FIG. 2 is a diagram showing an arrangement of an electrode of the fuel cell related to the embodiment.

### BEST MODE FOR CARRYING OUT THE INVENTION

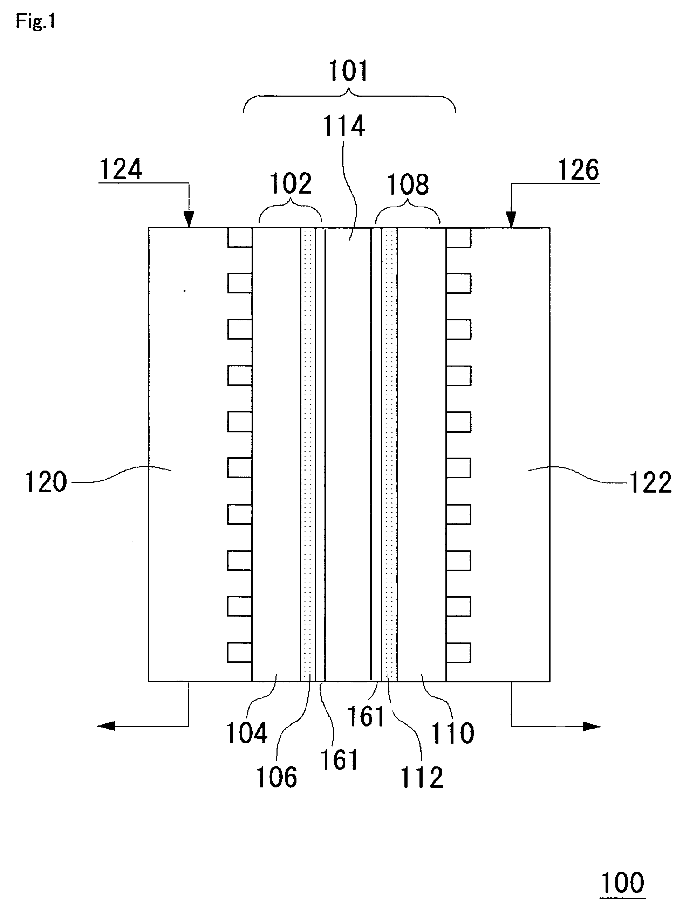

FIG. 1 is a sectional view schematically showing the structure of a fuel cell of the present embodiment. A membrane electrode assembly 101 is formed from a fuel electrode 102, an oxidant electrode 108, and a solid polymer electrolyte membrane 114. The fuel electrode 102 is formed from a porous base member 104, a catalyst layer 106, and an intermediate layer 161. The oxidant electrode 108 is formed from a porous base member 110, a catalyst layer 112, and an intermediate layer 161. The membrane electrode assembly 101 is electrically connected to a fuel electrode side separator 120 and an oxidant electrode side separator 122. The catalyst layer 112 includes a catalyst layer containing a catalyst and an ionically conductive resin.

In a fuel cell 100 arranged as above, fuel 124 is supplied to the fuel electrode 102 of each membrane electrode assembly 101 via the fuel electrode 102 side separator 120. An oxidant 126 such as air or oxygen is supplied to the oxidant electrode 108 of each membrane electrode assembly 101 via the oxidant electrode 108 side separator 122.

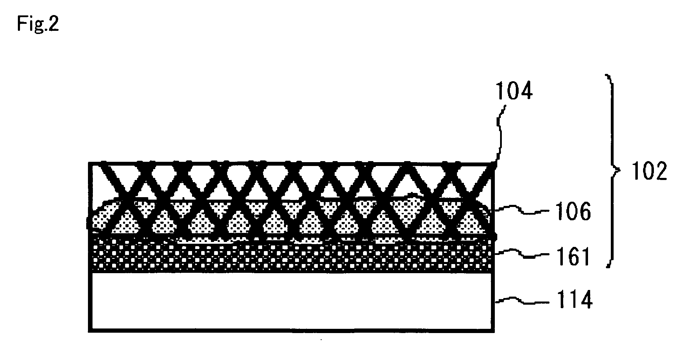

FIG. 2 is an enlarged view of the fuel electrode 102 section of the fuel cell in FIG. 1. The catalyst layer 106 is formed on the porous base member 104. The intermediate layer 161 is provided between the catalyst layer 106 and the solid polymer electrolyte membrane 114.

As the base member 104 and the base member 110, a porous base member such as a carbon paper, a carbon molding, sintered carbon, sintered metal, or a metal foam may be used. With regard to a treatment for making the base member water repellent, a water repellent such as polytetrafluoroethylene may be used.

Examples of the catalyst of the fuel electrode 102 include platinum, alloys of platinum with ruthenium, gold, rhenium and the like, and rhodium, palladium, iridium, osmium, ruthenium, rhenium, gold, silver, nickel, cobalt, lithium, lanthanum, strontium, and yttrium. As the catalyst of the oxidant electrode 108, the same kind of catalyst as the catalyst of the fuel electrode 102 may be used, and the above-mentioned materials cited as examples may be used. The catalyst of the fuel electrode 102 and the catalyst of the oxidant electrode 108 may be the same as or different from each other.

Examples of carbon particles for supporting the catalyst include acetylene black (Denka Black (registered trademark, manufactured by Denki Kagaku Kogyo), Vulcan-XC72 (registered trademark, manufactured by Cabot Corp.), etc.), Ketjen black (registered trademark, manufactured by Lion Corporation), carbon nanotube, and carbon nanohorn. The particle size of the carbon particles is, for example, 0.01 to 0.1 µm, and preferably 0.02 to 0.06 µm.

The solid polymer electrolyte membrane 114 contains as a main component a first ionically conductive resin. The main component of the resin forming the catalyst layers 106 and 112 is a second ionically conductive resin.

The intermediate layer 161 contains a third ionically conductive resin and catalyst particles. If this third ionically conductive resin and the first ionically conductive resin employ the same type of resin, the solid polymer electrolyte membrane 114 and the intermediate layer 161 contain a common resin, and the adhesion between the two is further improved. For example, if both thereof employ an aromatic polyether ketone described below, and at least one thereof is a crosslinked product, the adhesion between the two is markedly improved.

In this embodiment, the intermediate layer 161 is provided in regions both between the solid polymer electrolyte membrane 114 and the fuel electrode 102 and between the solid polymer electrolyte membrane 114 and the oxidant electrode 108, but an arrangement in which the intermediate layer 161 is provided in either one region thereof is also possible. Furthermore, the intermediate layer 161 does not need to be formed over the whole area of these regions, and may be formed on part of the above-mentioned regions. For example, the intermediate layer 161 may be formed as an island. The thickness of the intermediate layer 161 is, for example, appropriately selected from the range of 0.1 µm to 20 µm.

The first, second, and third ionically conductive resins are explained below.

The second ionically conductive resin forming the catalyst layers 106 and 112 plays a role, on the electrode surface, in providing an electrical connection between the solid polymer electrolyte membrane 114 and the catalyst-supporting carbon particles, and is required to have good proton conductivity and water mobility; furthermore, with regard to the fuel electrode 102 permeability for an organic liquid fuel such as methanol is required, and with regard to the oxidant electrode 108 oxygen permeability is required. It is desirable for the second ionically conductive resin to satisfy such requirements, and a material having excellent proton conductivity or permeability for an organic liquid fuel such as methanol is preferably used. Specifically, it is preferable to use an organic polymer having a polar group, for example, a strong acidic group such as a sulfonic acid group or a weak acidic group such as a carboxyl group or a phosphoric acid group. Examples of such an organic polymer include
a sulfonic group-containing perfluorocarbon (Nafion (registered trademark, manufactured by E. I. du Pont de Nemours and Company), Aciplex (manufactured by Asahi Kasei Corp.), etc.);
a carboxyl group-containing perfluorocarbon (Flemion (registered trademark) S film (manufactured by Asahi Glass Co., Ltd.) and the like);
a copolymer such as a polystyrenesulfonic acid copolymer, a polyvinylsulfonic acid copolymer, a crosslinked alkylsulfonic acid derivative, or a fluorine-containing polymer formed from a fluorine resin skeleton and sulfonic acid; and
a copolymer obtained by copolymerization of an acrylamide such as acrylamido-2-methylpropanesulfonic acid and an acrylate such as n-butyl methacrylate.

Moreover, as other polymers to which a polar group is bonded,
a resin having nitrogen or a hydroxyl group, for example, a polybenzimidazole derivative, a polybenzoxazole derivative, a crosslinked polyethyleneimine, a polysilamine derivative, an amine-substituted polystyrene such as polydiethylaminoethylstyrene, a nitrogen-substituted polyacrylate such as diethylaminoethyl polymethacrylate;
a hydroxyl group-containing polyacrylic resin represented by silanol-containing polysiloxane or hydroxyethyl polymethyl acrylate; and
a hydroxyl group-containing polystyrene resin represented by parahydroxypolystyrene; and the like may be used.

Among these, from the viewpoint of ionic conductivity, the sulfonic acid group-containing perfluorocarbon (Nafion (registered trademark, manufactured by E.I. du Pont de Nemours and Company), Aciplex (manufactured by Asahi Kasei Corp.) and the like), the carboxyl group-containing perfluorocarbon (Flemion (registered trademark) S film (manufactured by Asahi Glass Co., Ltd.) and the like) are preferably used.

Furthermore, the above-mentioned polymer may have incorporated therein as appropriate a crosslinkable substituent such as, for example, a vinyl group, an epoxy group, an acrylic group, a methacrylic group, a cinnamoyl group, a methylol group, an azido group, or a naphthoquinonediazido group.

As the third ionically conductive resin forming the intermediate layer, (i) or (ii) below are preferably used.
(i) a protonic acid group-containing aromatic polyether ketone
(ii) a protonic acid group-containing crosslinked polymer having an aromatic unit

Since these resins have an ability to sufficiently bind the catalyst particles, by using them as a binder for the catalyst in the intermediate layer, transfer of protons via the intermediate layer is carried out smoothly. Since these resins have relatively little methanol crossover, the output of the fuel cell improves. Furthermore, since the resins have relatively little swelling with methanol, the durability when the fuel cell is used repeatedly is excellent.

Moreover, when the catalyst particles are formed from conductive particles and a metal catalyst supported on the conductive particles, due to the binding strength of the intermediate layer-forming resin, electrical contact between the conductive particles is exhibited well, and as a result the conductivity of the intermediate layer becomes good, and any increase in the internal resistance of the fuel cell is prevented.

An example of the above-mentioned (i) may include a resin containing, relative to all the repeating aromatic units, 10 to 100 mol % of a repeating structural unit represented by Formula (1) below and 0 to 90 mol % of a repeating structural unit represented by Formula (2) below. An example of the above-mentioned (ii) may include a crosslinked product that has been crosslinked by heating a resin having the structure below or irradiating it with electromagnetic waves.

In the present invention, the repeating structural unit of a crosslinked product is defined by a repeating unit of an uncrosslinked resin. 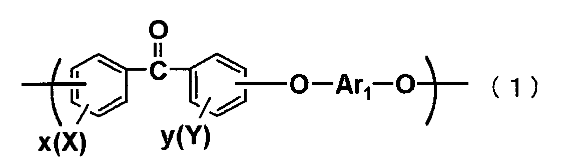 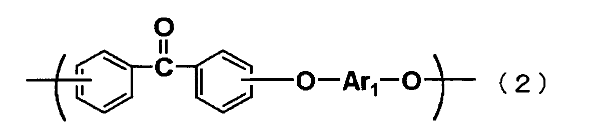 (In Formulae (1) and (2), each Ar₁ independently denotes a divalent group containing an aromatic ring. A straight-chain or branched-chain alkyl group having 1 to 20 carbon atoms is directly bonded to at least one of the aromatic rings. A hydrogen of the aromatic ring may be substituted by an alkyl group, a halogenated hydrocarbon group, or a halogen. X and Y each denote a protonic acid group selected from a sulfonic acid group, a carboxylic acid group, a phosphoric acid group, or a sulfonimide group, or a metal salt thereof. x and y are integers of 0 or higher, and x + y is 1 or higher.)

This sulfonic acid group-containing aromatic polyether ketone undergoes crosslinking by irradiation with electromagnetic waves such as ultraviolet rays or by heating, thus forming a three-dimensional network structure.

This crosslinking mechanism is thought to be as follows. It is assumed that the carbonyl group in the polymer and the alkyl group having 1 to 20 carbon atoms directly bonded to the aromatic ring in the polymer are involved in a crosslinking reaction as shown below. In the reaction formula below, a case is shown in which the alkyl group is a methyl group.

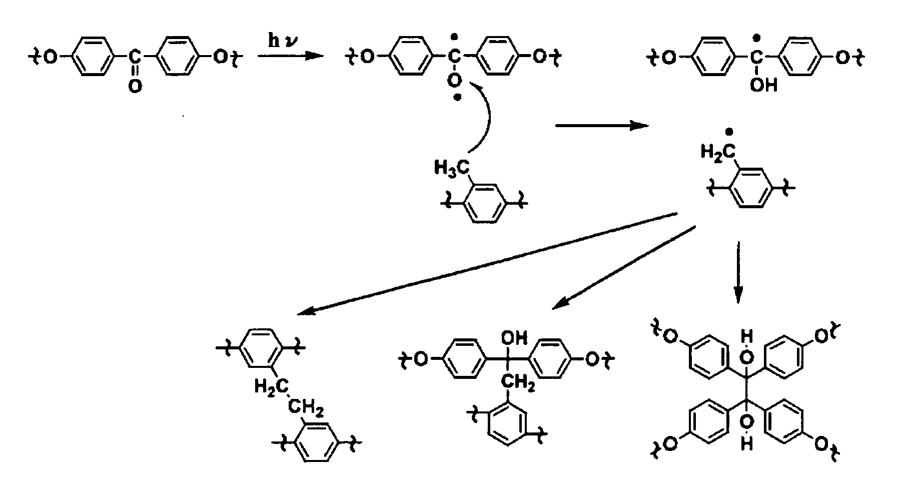

As shown in the reaction formula above, by supplying energy by irradiation with ultraviolet rays, a heat treatment, a radical is formed on benzophenone, and this abstracts hydrogen from the methyl group. It is further assumed that subsequent reactions such as dimerization of benzyl radicals, a radical coupling reaction between a benzyl radical and an alcoholic carbon, and dimerization of alcoholic carbon radicals result in crosslinking between polymers.

Furthermore, this crosslinking mechanism is particularly preferable since the mechanism results in that the bond formed by the crosslinking does not contain hydrogen at the α-position of a tertiary carbon, such a hydrogen being susceptible to radical attack.

In this way, Ar1 is a divalent group that includes a straight-chain or branched-chain alkyl group having 1 to 20 carbon atoms, and can form a crosslinking site together with a carbonyl group in the polymer without forming a component that is released, and specific examples thereof are as follows. 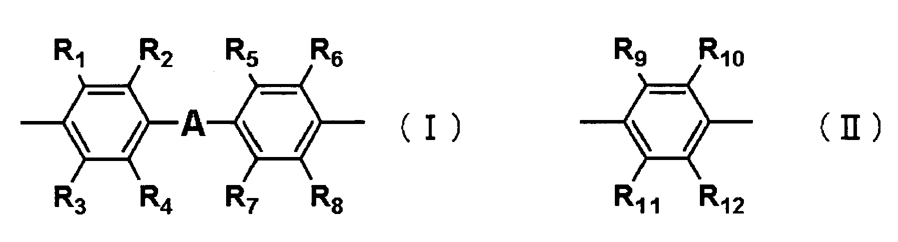 (In Formula (I), R₁ to R₈ independently denote a hydrogen atom or an alkyl group having 1 to 20 carbon atoms, and at least one thereof denotes an alkyl group. A denotes a single bond, -CH₂-, -C(CH₃)₂-, -O-, -S-, -SO₂-, or the group below. 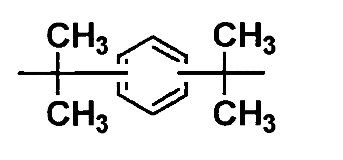 In Formula (II), R9 to R12 independently denote a hydrogen atom or an alkyl group having 1 to 20 carbon atoms, and at least one thereof is an alkyl group.)

Since the sulfonic acid group-containing aromatic polyether ketone has, in a repeating structural unit, a carbonyl group and an alkyl group directly bonded to an aromatic ring, a high degree of crosslinking can be achieved.

Furthermore, since the protonic acid group of the sulfonic acid group-containing aromatic polyether ketone is bonded to an aromatic ring that is directly bonded to -CO-, which is an electron-attracting group, compared with a protonic acid group bonded to another aromatic ring, the bonding strength is high and resistance to decomposition and dissociation is good.

A resin having the above-mentioned structure is a resin having crosslinking properties. It may be subjected to crosslinking during or after adhesion of the intermediate layer, and after being crosslinked it shows an excellent proton conductivity, heat resistance, water resistance, and adhesion, and exhibits desirable properties as a binder for the intermediate layer. The intermediate layer may be formed from the above-mentioned uncrosslinked resin, or may be formed from the above-mentioned crosslinked resin. It is preferable that at least one portion of the above-mentioned resin is in a crosslinked state, and by so doing the adhesion and the proton conductivity between the polymer electrolyte membrane and the diffusion electrode become particularly good. When the fuel cell is used for a long period of time, excellent adhesion and proton conductivity can be obtained.

The protonic acid group-containing aromatic polyether ketone containing a repeating structural unit represented by Formulae (1) and (2) can be obtained by the method below.

For example, there is a method in which it is produced by condensation-polymerization between an aromatic dihydroxy compound represented by Formula (3) below and an aromatic dihalide compound represented by Formula (4) or (5) below.

HO-Ar₁-OH (3)

(In the formula, -Ar₁- denotes a group of Formula (I) or (II) below. 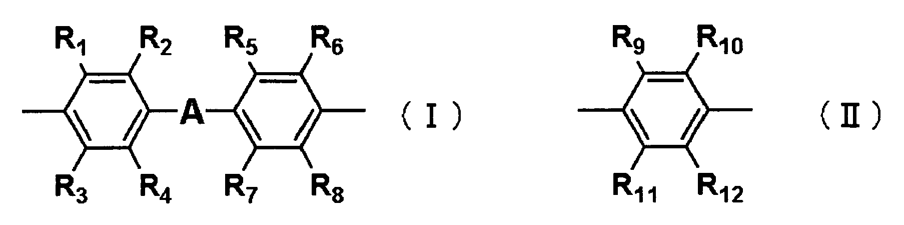 In Formula (I), R₁ to R₈ independently denote a hydrogen atom or an alkyl group having 1 to 20 carbon atoms, and at least one thereof denotes an alkyl group. A denotes a single bond, -CH₂-, -C(CH₃)₂-, -O-, -S-, -SO₂-, or the group below. 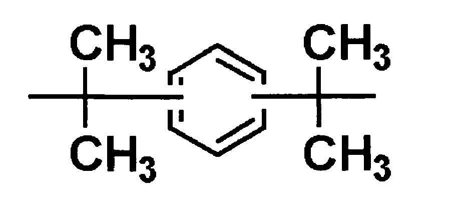 In Formula (II), R₉ to R₁₂ independently denote a hydrogen atom or an alkyl group having 1 to 20 carbon atoms, and at least one thereof is an alkyl group.) 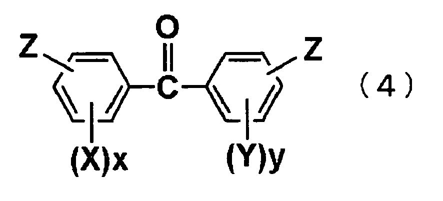 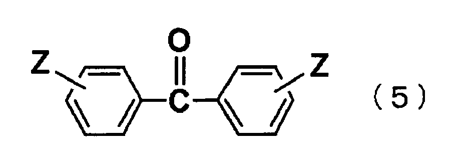 (In the formulae, Z denotes a halogen. In Formula (4), X and Y each denotes a protonic acid group selected from a sulfonic acid group, a carboxylic acid group, a phosphoric acid group, or a sulfonimide group, or a metal salt thereof. x and y are integers of 0 or higher, and x + y is 1 or higher.)

Conditions for the condensation-polymerization may be appropriately selected based on a conventionally known method. When selecting these conditions, for example, 'Shin Kobunshi Jikkengaku' (New Polymer Experiments) 3 Polymer Synthesis/Reactions (2), pp. 155 to 175 (Kyoritsu Shuppan Co. , Ltd. (1996)), 'Jikken Kagaku Koza' (Experimental Chemistry Series) 28 Polymer Chemistry, pp. 326 to 332 (Maruzen (1992)), 'Shin Jikken Kagaku Koza' (New Experimental Chemistry Series) 19 Polymer Chemistry (I), pp. 137 to 138 (Maruzen (1978)) can be referred to.

The protonic acid group-containing aromatic polyether ketone thus obtained may be subjected to purification using water, aqueous hydrochloric acid, an organic solvent and the like, thus enabling an acid or a salt to be removed.

The molecular weight of the protonic acid group-containing aromatic polyether ketone thus obtained may be evaluated using reduced viscosity. The reduced viscosity η inh of the protonic acid group-containing crosslinkable polyether ketone related to the present invention is usually in the range of 0.1 to 5.0 dL/g (measured in dimethyl sulfoxide with a concentration of 0.5 g/dL at 35 degree C), preferably 0.2 to 4.0 dL/g, and more preferably 0.3 to 3.0 dL/g. When it is less than 0.3 dL/g, since the molecular weight is low, sufficient adhesion cannot be obtained and, furthermore, the mechanical characteristics of the film obtained are degraded, and when it exceeds 3.0 dL/g, it is difficult to dissolve it in a solvent, it becomes difficult to mix with an electrode material or carry out coating and, moreover, it is difficult to obtain a sufficient film thickness.

The protonic acid group-containing aromatic polyether ketone may be made into a solution or a suspension using a known solvent. The solvent can be selected without particular limitation as long as a liquid can be obtained therefrom, and examples thereof include water, an alcohol such as methanol, ethanol, 1-propanol, or 2-propanol, a hydrocarbon such as toluene or xylene, a halogenated hydrocarbon such as methyl chloride or methylene chloride, an ether such as dichloroethyl ether, 1,4-dioxane, or tetrahydrofuran, a fatty acid ester such as methyl acetate or ethyl acetate, a ketone such as acetone or methyl ethyl ketone, an amide such as N,N-dimethylacetamide, and an aprotic polar solvent such as *N*-methyl-2-pyrrolidone or dimethyl sulfoxide. They may be used singly or as a mixed solvent.

When the protonic acid group-containing aromatic polyether ketone is crosslinked by heating, the method for supplying heat is not particularly limited, and heating by means of a normal oven and the like is sufficient. The temperature and the time for heating depend on the structure of the resin used and its film thickness, but the temperature is usually 120 degree C to 300 degree C, and preferably 150 degree C to 250 degree C, and the time is usually 0.1 to 180 min, and preferably 1 to 60 min.

The light source used for photocrosslinking the protonic acid group-containing aromatic polyether ketone is not particularly limited, and a light source that can irradiate with light in the ultraviolet and visible range is usually used. Specific examples thereof include a low pressure mercury lamp, a high pressure mercury lamp, a xenon lamp, and a metal halide lamp. The exposure dose depends on the wavelength of the irradiating light, the structure of the resin irradiated, the content of the resin, the temperature of crosslinking, the film thickness and the like, but it is usually 100 to 40,000 mJ/cm², and preferably 500 to 20,000 mJ/cm².

Specific examples of the protonic acid group-containing crosslinkable aromatic polyether ketone resin include those formed by condensation-polymerization between an aromatic dihydroxy compound represented by Formula (3) above and an aromatic dihalide compound represented by Formula (4) or (5) above. Compounds thereof are illustrated below.

Examples of the aromatic dihydroxy compound represented by Formula (3) above include 2-methylhydroquinone, 2-ethylhydroquinone, 2-isopropylhydroquinone, 2-octylhydroquinone, 2,3-dimethylhydroquinone, 2,3-diethylhydroquinone, 2,5-dimethylhydroquinone, 2,5-diethylhydroquinone, 2,5-diisopropylhydroquinone, 2,6-dimethylhydroquinone, 2,3,5-trimethylhydroquinone, 2,3,5,6-tetramethylhydroquinone, 3,3'-dimethyl-4,4'-dihydroxybiphenyl, 3,3',5,5'-tetramethyl-4,4'-dihydroxybiphenyl, 3,3'-dimethyl-4,4'-dihydroxydiphenylmethane, 3,3',5,5'-tetramethyl-4,4'-dihydroxydiphenylmethane, 3,3',5,5'-tetraethyl-4,4'-dihydroxydiphenylmethane, 3,3'-dimethyl-4,4'-dihydroxydiphenyl ether, 3,3',5,5'-tetramethyl-4,4'-dihydroxydiphenyl ether, 3,3'-dimethyl-4,4'-dihydroxydiphenyl sulfide, 3,3',5,5'-tetramethyl-4,4'-dihydroxydiphenyl sulfide, 3,3'-dimethyl-4,4'-dihydroxydiphenylsulfone, 3,3',5,5'-tetramethyl-4,4'-dihydroxydiphenylsulfone, 2,2-bis(3-methyl-4-hydroxyphenyl) propane, 2,2-bis(3-ethyl-4-hydroxyphenyl)propane, 2,2-bis(3,5-dimethyl-4-hydroxyphenyl)propane, α,α'-bis(3-methyl-4-hydroxyphenyl)-1,4-diisopropylbenzene, α,α'-bis(3,5-dimethyl-4-hydroxyphenyl)-1,4-diisopropylben zene, α,α'-bis(3-methyl-4-hydroxyphenyl)-1,3-diisopropylbenzene, and α,α'-bis(3,5-dimethyl-4-hydroxyphenyl)-1,3-diisopropylben zene, which contain an alkyl group.

Furthermore, part of the aromatic dihydroxy compound represented by Formula (3) above may be replaced with hydroquinone, resorcin, catechol, 4,4'-dihydroxybiphenyl, 4,4'-dihydroxydiphenyl sulfide, 4,4'-dihydroxydiphenylmethane, 4,4'-dihydroxydiphenyl ether, 4,4'-dihydroxydiphenylsulfone, 4,4'-dihydroxybenzophenone, 2,2-bis(4-hydroxyphenyl)propane, 1,1,1,3,3,3-hexafluoro-2,2-bis(4-hydroxyphenyl)propane, 1,4-bis(4-hydroxyphenyl)benzene, which contain no alkyl group, and α,α'-bis(4-hydroxyphenyl)-1,4-dimethylbenzene, α,α'-bis(4-hydroxyphenyl)-1,4-diisopropylbenzene, α,α'-bis(4-hydroxyphenyl)-1,3-diisopropylbenzene, 4,4'-dihydroxybenzophenone, 1,4-bis(4-hydroxybenzoyl)benzene, 3,3-difluoro-4,4'-dihydroxybiphenyl and the like.

These aromatic dihydroxy compounds may be used singly or in a combination of a plurality thereof, and combining appropriate amounts thereof enables a desired amount of an alkyl group having crosslinking properties to be incorporated into the aromatic polyether ketone.

Examples of the aromatic dihalide compound represented by Formula (5) above include 4,4'-difluorobenzophenone, 3,3'-difluorobenzophenone, 4,4'-dichlorobenzophenone, and 3,3'-dichlorobenzophenone.

As the protonic acid group-containing aromatic dihalide compound represented by Formula (4) above, sulfonates of the above-mentioned aromatic dihalide compounds can be cited. The sulfonates include salts of alkali metals such as Na and K. The sulfonates may be obtained by a method in which an aromatic dihalide compound is sulfonated by a known sulfonating agent such as fuming sulfuric acid (Macromol. Chem. Phys., 199, 1421 (1998)) and the like. Examples of the protonic acid group-containing aromatic dihalide compound include, in addition to the above-mentioned sulfonates, an aromatic dihalide compound having 2 carboxylic acid groups and an alkaline metal salt thereof, an aromatic dihalide compound having a phosphoric acid group such as 5,5'-carbonylbis(2-fluorobenzenephosphonic acid) and an alkaline metal salt thereof, and an aromatic dihalide compound having a sulfonimide group and an alkaline metal salt thereof.

By combining appropriate amounts of the aromatic dihalide compound having a protonic acid group and the aromatic dihalide compound having no protonic acid group, an aromatic polyether ketone containing a desired amount of a protonic acid group can be obtained.

The ion-exchange group equivalent weight of the sulfonic acid group-containing crosslinkable aromatic polyether ketone resin of the present invention is not particularly limited, but it is preferably 200 to 5,000 g/mol, and more preferably 200 to 1,000 g/mol. The ion-exchange group equivalent weight referred to here is defined as the weight of resin per mole of the protonic acid group, and means the reciprocal of the number of moles of protonic acid group per unit weight of resin. That is, the smaller the ion-exchange group equivalent weight, the larger the amount of protonic acid group per unit weight of resin. When the ion-exchange group equivalent weight is less than the above-mentioned range, there are the problems that the resin dissolves in water or methanol, the resin swells significantly and the like. On the other hand, when the ion-exchange group equivalent weight is too large, the ionic conductivity is low, and a high output fuel cell cannot be obtained.

It is desirable for the third ionically conductive resin forming the intermediate layer to have a degree of swelling with methanol of no greater than 50%, and preferably no greater than 20% (degree of swelling in a 70 vol % MeOH aqueous solution). By so doing, particularly good interfacial adhesion and proton conductivity can be realized.

In addition to the above-mentioned resin, the intermediate layer 161 may contain resins other than the above resins. For example, it is preferable to use an organic polymer having a protonic acid group, for example, a strong acidic group such as a sulfonic group or a weak acidic group such as a phosphoric acid group or a carboxyl group. Examples of the organic polymer include
an aromatic-containing polymer such as sulfonated polyether sulfone, sulfonated polysulfone, sulfonated polyphenylene sulfide, sulfonated polyimide, sulfonated polyamide, sulfonated poly(4-phenoxybenzoyl-1,4-phenylene), or alkylsulfonated polybenzimidazole;
a copolymer such as a polystyrene sulfonic acid copolymer, a polyvinyl sulfonic acid copolymer, a crosslinked alkylsulfonic acid derivative, or a fluorine-containing polymer formed from a fluorine resin skeleton and sulfonic acid;
a copolymer obtained by copolymerization of an acrylamide such as acrylamido-2-methylpropanesulfonic acid and an acrylate such as n-butyl methacrylate;
a sulfonic group-containing perfluorocarbon (Nafion (registered trademark, manufactured by E. I. du Pont de Nemours and Company), Aciplex (manufactured by Asahi Kasei Corp.)); and
a carboxyl group-containing perfluorocarbon (Flemion (registered trademark) S film (manufactured by Asahi Glass Co., Ltd.)). The resin materials cited above as examples may be used singly or in a combination of two or more kinds.

The intermediate layer 161 may contain the second ionically conductive resin in addition to the third ionically conductive resin. By so doing, the adhesion between the intermediate layer 161 and the catalyst layer 106 formed from the second ionically conductive resin is more markedly improved. In this case, the intermediate layer 161 is formed from the second and third ionically conductive resins, and the second ionically conductive resin/third ionically conductive resin ratio by weight is preferably 10/1 to 1/10, and more preferably 4/1 to 1/1. Although the amount of catalyst contained in the intermediate layer is not particularly limited, good results can be obtained when the ratio by weight of the ionically conductive resin and the catalyst is 10/1 to 1/1.

The first ionically conductive resin forming the solid polymer electrolyte membrane 114 preferably employs the same resin as the above-mentioned third ionically conductive resin. That is, the following material (i) or (ii) are preferably used:
(i) a protonic acid group-containing aromatic polyether ketone resin,
(ii) a protonic acid group-containing crosslinked polymer having an aromatic unit.

These resins have excellent proton conductivity, relatively little swelling with methanol, and excellent durability when the fuel cell is used repeatedly. Furthermore, since the resins have relatively little methanol crossover, the output of the fuel cell improves. Specifically, aromatic polyether ether ketones or aromatic polyether ketones represented by the formulae below, in particular a polymer compound having repeating units of Formulae (1) and (2) above, are preferably used. Examples thereof include the polymer compounds below.
Protonic acid group-containing aromatic polyether ether ketone 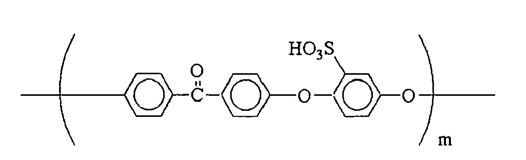 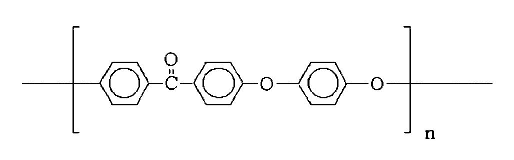
Protonic acid group-containing crosslinkable aromatic polyether ketones 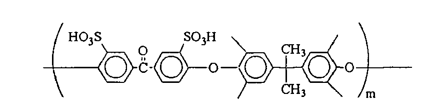 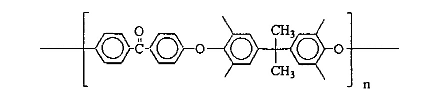 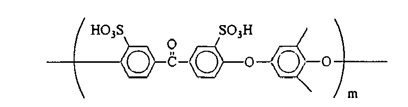 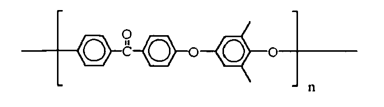 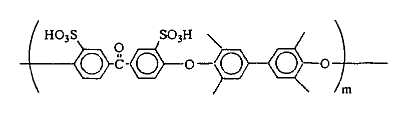 In the formulae above, m and n each denote a ratio of repeating unit structures.

The solid polymer electrolyte membrane 114 may be formed from resins other than the above-mentioned resins. An organic polymer having a protonic acid group, for example, a strong acidic group such as a sulfonic group or a weak acidic group such as a phosphoric acid group or a carboxyl group is preferably used. Examples of such an organic polymer include
an aromatic-containing polymer such as sulfonated polyether sulfone, sulfonated polysulfone, sulfonated polyphenylene sulfide, sulfonated polyimide, sulfonated polyamide, sulfonated poly(4-phenoxybenzoyl-1,4-phenylene), or alkylsulfonated polybenzimidazole;
a copolymer such as a polystyrene sulfonic acid copolymer, a polyvinyl sulfonic acid copolymer, a crosslinked alkylsulfonic acid derivative, or a fluorine-containing polymer formed from a fluorine resin skeleton and sulfonic acid;
a copolymer obtained by copolymerization of an acrylamide such as acrylamido-2-methylpropanesulfonic acid and an acrylate such as n-butyl methacrylate;
a sulfonic group-containing perfluorocarbon (Nafion (registered trademark, manufactured by E. I. du Pont de Nemours and Company), Aciplex (manufactured by Asahi Kasei Corp.)); and
a carboxyl group-containing perfluorocarbon (Flemion (registered trademark) S film (manufactured by Asahi Glass Co., Ltd.)). The resin materials cited above as examples may be used singly or in a combination of two or more kinds.

A method for manufacturing the fuel cell having the above-mentioned constitution is now explained. First of all, the catalyst layer is formed. Catalyst-supporting carbon particles and particles of the above-mentioned second ionically conductive resin are dispersed in a solvent to give a paste, and this is then applied to base members 104 and 110 and dried to give catalyst layers 106 and 112. Here, the particle size of the carbon particles is made to be, for example, 0.001 to 1 µm. The particle size of the catalyst particles is made to be, for example, 0.1 nm to 100 nm. Furthermore, the particle size of the second ionically conductive resin particles is made to be, for example, 0.5 to 100 µm. The carbon particles and the second ionically conductive resin particles are used at a ratio by weight in the range of, for example, 2:1 to 40:1. Furthermore, the ratio by weight of the solvent and the solute in the paste is, for example, on the order of 1:2 to 10:1. A method of coating a base member with the paste is not particularly limited but, for example, a method such as brush coating, spray coating, or screen printing may be used. The paste is applied at a thickness of about 1 µm to 2 mm. After the paste is applied, it is heated to give a fuel electrode 102 or an oxidant electrode 108. The heating temperature and the heating time are appropriately selected according to the resin material used and, for example, the heating temperature may be 100 degree C to 250 degree C, and the heating time may be 30 sec to 30 min. By so doing, the fuel electrode 102 and the oxidant electrode 108 having a catalyst layer formed on the surface thereof can be prepared.

The solid polymer electrolyte membrane 114 may be prepared by employing an appropriate method according to the material used. For example, it may be obtained by casting a liquid in which an organic polymer material is dissolved or dispersed in a solvent on a releasing sheet such as polytetrafluoroethylene and the like, followed by drying. It is also possible to use a product that has been molded into a sheet in advance.

A surface of the solid polymer electrolyte membrane 114 is subsequently coated with a coating solution in which the third ionically conductive resin and the catalyst-supporting carbon particles are mixed and dispersed. Here, the coating usually includes a step of applying the coating solution and a step of drying, but the coating solution does not need to be dried completely. It is also possible to omit the drying step. This process is carried out for both of the surface and the reverse surface of the solid polymer electrolyte membrane 114. For example, a method in which the solid polymer electrolyte membrane 114 is placed on a releasing sheet such as polytetrafluoroethylene and the like, and the above-mentioned coating solution is applied to one of the surfaces may be employed. By so doing, the solid polymer electrolyte membrane 114 having the intermediate layer 161 formed on both surfaces thereof can be obtained.

The solid polymer electrolyte membrane 114 prepared as described above is sandwiched between the fuel electrode 102 and the oxidant electrode 108 and subjected to hot pressing, thus giving a membrane electrode assembly. During this process, the surfaces of the two electrodes on which the catalyst is provided are brought into contact with the solid polymer electrolyte membrane 114. The hot pressing conditions are selected according to the material. Specifically, for example, the temperature is 100 degree C to 250 degree C, the pressure is 5 to 2, 100 kgf/cm², and the time is 10 sec to 1,000 sec.

By means of the above-mentioned process, a fuel cell having a constitution in which the solid polymer electrolyte membrane 114 is sandwiched between the fuel electrode 102 and the oxidant electrode 108 can be obtained.

It is usually difficult to directly join the solid polymer electrolyte membrane formed from the first ionically conductive resin (crosslinked aromatic polyether ketone, and the like) and the second ionically conductive resin (for example, Nafion) forming the catalyst layer. In the above-mentioned production method, one or both of the two is coated with the uncrosslinked third ionically conductive resin (crosslinkable aromatic polyether ketone and the like), and after that the two are joined. By so doing, the solid polymer electrolyte membrane 114 and the catalyst layer 112 can be strongly joined.

The coating solution may be applied to either the solid polymer electrolyte membrane or the catalyst layer, but it is preferable to apply it to the solid polymer electrolyte membrane or both the solid polymer electrolyte membrane and the catalyst layer. Whereas a porous base member such as a carbon paper has an uneven surface profile, the solid polymer electrolyte membrane 114 has a relatively flat surface, and coating such a flat surface with the coating solution improves the adhesion performance.

The fuel cell related to the embodiment is explained above. In accordance with this fuel cell, since the intermediate layer 161 containing the above-mentioned specified resin and catalyst particles is disposed between the catalyst layers 106 and 112 and the solid polymer electrolyte membrane 114, a fuel cell having excellent adhesion of the electrodes and excellent proton conductivity between the electrode and the polymer electrolyte membrane can be obtained.

The present invention is explained above by reference to an embodiment. A person skilled in the art will understand that this embodiment is an example and can be modified in a variety of ways, and such modified examples are also included in the spirit and scope of the present invention.

For example, the constitution of the catalyst layer or the intermediate layer may be varied between the fuel electrode and the oxidant electrode. In particular, an arrangement in which, with regard to the intermediate layer, the balance in terms of adhesion, proton conductivity, methanol permeability and the like is slightly changed between the fuel electrode and the oxidant electrode might improve the performance of the fuel cell in some cases. From such a viewpoint, it is effective to change the resin composition of the intermediate layer between the two electrodes.

### (Examples)

Examples of the present invention are explained below. In the Examples and Comparative Examples below, the total film thickness of the intermediate layer was made identical.

### (Example 1)

In this example, the resin materials of the first embodiment were selected as follows, and a fuel cell was prepared and evaluated.

### (i) First ionically conductive resin (polymer electrolyte membrane)

A protonic acid group-containing aromatic polyether ketone was used.

### (ii) Second ionically conductive resin (catalyst layer)

Nafion was used.

### (iii) Third ionically conductive resin (intermediate layer)

A mixture of the protonic acid group-containing aromatic polyether ketone and Nafion was used.

### Step (a): synthesis of ionically conductive resin (protonic acid group-containing aromatic polyether ketone)

A five-necked reactor equipped with a nitrogen inlet tube, a thermometer, a reflux condenser, and a stirrer was charged with 4.22 g (0.01 mol) of 5,5'-carbonylbis(sodium 2-fluorobenzenesulfonate), 2.18 g (0.01 mol) of 4,4'-difluorobenzophenone, 5.69 g (0.02 mol) of 2,2-bis(3,5-dimethyl-4-hydroxyphenyl)propane, and 3.46 g (0.025 mol) of potassium carbonate. 40 mL of dimethyl sulfoxide and 30 mL of toluene were added to the above, the mixture was stirred under a nitrogen atmosphere, and heated at 130 degree C for 2 hours, and after water formed was removed outside the system, the toluene was distilled away. Subsequently, a reaction was carried out at 160 degree C for 14 hours, thus giving a viscous polymer solution. The solution thus obtained was diluted by adding 60 mL of dimethyl sulfoxide thereto and then filtered. This polymer solution was discharged into 600 mL of acetone, and a polymer powder thus precipitated was filtered and then dried at 160 degree C for 4 hours to give 10.39 g (92% yield) of the polymer powder. After 0. 50 g of the Na sulfonate-containing aromatic polyether ketone powder was dissolved in 100 mL of dimethyl sulfoxide, the reduced viscosity thereof was measured at 35 degree C, giving a value of 0.85 dL/g. In this stage, a soluble polymer compound having the structure shown in the formula below was obtained. This polymer compound was a crosslinkable polymer that would form crosslinking by irradiation with light or by heating.

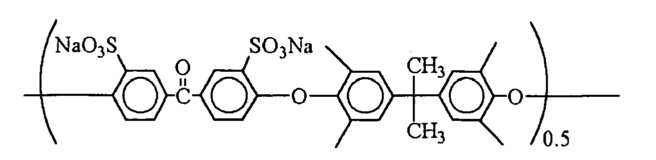

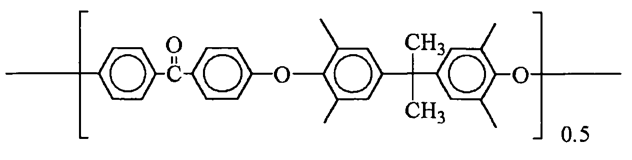

### Step (b): preparation of catalyst-supporting particles

500 g of a dinitrodiamine platinum nitrate solution containing platinum at 3% as a catalyst was mixed with 10 g of acetylene black (Denka Black (registered trademark); manufactured by Denki Kagaku Kogyo) and stirred, and 60 mL of 98% ethanol was then added as a reducing agent. This solution was stirred and mixed at about 95 degree C for 8 hours, thus supporting the catalyst material, that is, platinum fine particles on the acetylene black particles. This solution was filtered and dried to give catalyst-supporting carbon particles. The amount of platinum supported was on the order of 50% relative to the weight of the acetylene black. The above-mentioned catalyst was a catalyst for the oxidant electrode, and platinum-ruthenium catalyst-supporting carbon particles were prepared separately as a catalyst for the fuel electrode.

### Step (c): preparation of catalyst layer paste

By mixing 200 mg of the above-mentioned catalyst-supporting carbon particles and 3. 5 mL of a 5% Nafion solution (alcohol solution, manufactured by Aldrich Chemical Company, Inc.), Nafion was made to adsorb on the surface of these catalyst and carbon particles. The suspension thus obtained was dispersed by an ultrasonic disperser at 50 degree C for 3 hours to form a paste, and Paste A was thus obtained.

### Step (d): preparation of coating solution for intermediate layer formation

The above-mentioned catalyst-supporting carbon particles, 5% Nafion solution (alcohol solution, manufactured by Aldrich Chemical Company, Inc.), and a 5% solution of the sulfonic acid group-containing aromatic polyether ketone (mixed solvent of tetrahydrofuran 20 wt % and water 80 wt %) prepared by soaking the Na sulfonate-containing aromatic polyether ketone powder synthesized in Step (a) in 2N sulfuric acid overnight and then in distilled water overnight, and further drying at 150 degree C for 4 hours, were mixed to give a coating solution for intermediate layer formation.

The concentration of the polymer contained in the coating solution was 5 to 10 wt %. The ratio by weight of the polymer and the catalyst-supporting carbon particles was 2:1.

### Step (e): preparation of polymer electrolyte membrane

The polymer powder obtained in Step (a) was dissolved in dimethyl sulfoxide, cast on a glass base member, and dried at 200 degree C for 4 hours to give a Na sulfonate-containing aromatic polyether ketone film (A). This film was exposed to light at 6,000 mJ/cm² using a metal halide lamp so as to carry out photocrosslinking, thus giving a Na sulfonate-containing aromatic polyether ketone crosslinked film (B).

When part of the Na sulfonate-containing aromatic polyether ketone film (A) was soaked in dimethyl sulfoxide, it dissolved completely. On the other hand, the Na sulfonate-containing aromatic polyether ketone crosslinked film (B) became completely insoluble in dimethyl sulfoxide, and it was confirmed that crosslinking resulted in improvements in chemical resistance and water resistance. After this film was further soaked in 2N sulfuric acid overnight, it was soaked in distilled water overnight so as to carry out proton exchange, and further dried at 150 degree C for 4 hours, thus finally giving a sulfonic acid group-containing aromatic crosslinked polyether ketone film. The film thus obtained had high flexibility and toughness. The solid polymer electrolyte membrane 114 having dimensions of 10 cm x 10 cm and a thickness of 50 µm was thus obtained. Step (f): preparation of electrodes

The catalyst layer paste A obtained in Step (c) was applied to a carbon paper (TGP-H-120, manufactured by Toray Industries, Inc.) by a screen printing method, and then dried at 100 degree C by heating to give the fuel electrode 102 and the oxidant electrode 108. The amount of platinum on the electrode surface thus obtained was 0.1 to 0.4 mg/cm².

### Step (g): preparation of cell

Both surfaces of the polymer electrolyte membrane obtained in Step (e) were coated with the coating solution for intermediate layer formation obtained in Step (d) by a brush coating method and dried. The electrodes obtained in Step (f) were subsequently arranged so that the catalyst layer-formed surfaces thereof were in contact with these coated surfaces. That is, they were arranged so that the solid polymer electrolyte membrane 114 was sandwiched between the fuel electrode 102 and the oxidant electrode 108. While maintaining this state, hot pressing was carried out to give a membrane electrode assembly. The hot pressing conditions were a temperature of 150 degree C and a pressure of 10 kgf/cm² for 10 sec. Furthermore, this membrane electrode assembly was set in a single cell measurement system for a fuel cell, thus forming a single cell.

This single cell was subjected to measurement of cell current-voltage characteristics using as a fuel a 10 vol % methanol aqueous solution and air (1 atm, 25 degree C). A continuous output of 30 mW/cm² at a voltage of 0. 4 V was observed. Furthermore, even in continuous operation for 1,000 hours, the decrease in output was not greater than 5% of the initial value.

### (Comparative Example 1)

Preparation of a fuel cell having a structure in which no intermediate layer was provided and a polymer electrolyte membrane and an electrode catalyst layer were directly joined was attempted. The materials forming the polymer electrolyte membrane, the catalyst layer and the like were the same as in Example 1. The polymer electrolyte membrane and the electrode were subjected to hot pressing under hot pressing conditions of a temperature of 150 degree C and a pressure of 10 kgf/cm² for 10 sec, but the two were not joined sufficiently, and a fuel cell that could be tested for evaluation could not be obtained.

### (Comparative Example 2)

A fuel cell was prepared in the same manner as in Example 1 except that the intermediate layer contained no catalyst. By subjecting the polymer electrolyte membrane and the electrodes to hot pressing under hot pressing conditions of a temperature of 150 degree C and a pressure of 10 kgf/cm² for 10 sec, a membrane electrode assembly was obtained. This was set in a single cell measurement system for a fuel cell, thus forming a single cell. This single cell was subjected to measurement of cell current-voltage characteristics using as a fuel a 10 vol % methanol aqueous solution and air (1 atm, 25 degree C). An initial output of 3 mW/cm² at a voltage of 0.4 V was observed. It is surmised that, in this comparative example, compared with the fuel cell of the present examples, the resistance at the interface between the polymer electrolyte membrane and the electrode was high, there was more methanol crossover from the fuel electrode to the oxidant electrode, and as a result the cell efficiency was degraded.

### (Example 2)

A fuel cell was prepared by making the intermediate layer of Example 1 as an intermediate layer having a gradient resin composition. In Step (d) of Example 1, a plurality of coating solutions having different concentrations were prepared, and the polymer electrolyte membrane was coated with these solutions in sequence, and dried. As the coating solutions, in Example 1 a coating solution having the composition (a) below was used, but in this example a coating solution having the composition (b) was additionally used.

### Coating solution (a)

Polymer represented by the formula (I) above, concentration 3 mass % by weight

Nafion 3 mass % by weight

### Coating solution (b)

Polymer represented by the formula (I) above, concentration 1 mass % by weight

Nafion 5 mass % by weight

The concentration was based on the entire coating solution.

The polymer electrolyte membrane was first coated with the coating solution (a) and dried naturally in the atmosphere, and then coated with the coating solution (b) and dried naturally in the atmosphere. The film thicknesses calculated from the amounts coated were substantially the same for both (a) and (b).

Subsequently, by carrying out hot pressing under hot pressing conditions of a temperature of 150 degree C and a pressure of 10 kgf/cm² for 10 sec in a state in which the electrodes sandwiched the electrolyte, a membrane electrode assembly was obtained. This was set in a single cell measurement system for a fuel cell, thus forming a single cell. This single cell was subjected to measurement of cell current-voltage characteristics using as a fuel a 10 vol % methanol aqueous solution and air (1 atm, 25 degree C). An initial output of 25 mW/cm² at a voltage of 0.4 V was observed.

## Claims

1. A fuel cell comprising:
a polymer electrolyte membrane; and
a pair of diffusion electrodes sandwiching the polymer electrolyte membrane;
wherein the polymer electrolyte membrane comprising a first resin;
the diffusion electrode comprising a porous base member and a catalyst layer, the catalyst layer being formed so as to be in contact with the porous base member, and the catalyst layer comprising a catalyst and a second resin having a protonic acid group;
an intermediate layer being provided between the polymer electrolyte membrane and at least one of the diffusion electrodes, the intermediate layer comprising a third resin and catalyst particles; and
the third resin comprising a protonic acid group-containing crosslinked polymer having an aromatic unit.

2. The fuel cell according to Claim 1, wherein the third resin includes a repeating structural unit represented by Formula (1) below and a repeating structural unit represented by Formula (2) below: 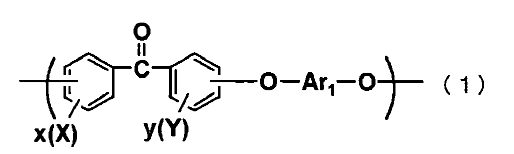 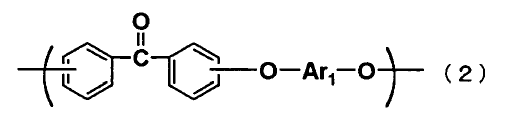 (in Formulae (1) and (2), each Ar₁ independently represents a divalent group containing an aromatic ring; a straight-chain or branched-chain alkyl group having 1 to 20 carbon atoms is directly bonded to at least one of the aromatic rings; a hydrogen of the aromatic ring may be substituted by an alkyl group, a halogenated hydrocarbon group, or a halogen; X and Y each represents a protonic acid group selected from a sulfonic acid group, a carboxylic acid group, a phosphoric acid group, or a sulfonimide group, or a metal salt thereof; x and y are integers of 0 or higher; and x + y is 1 or higher).

3. The fuel cell according to Claim 1, wherein the first resin is a resin formed by crosslinking a protonic acid group-containing crosslinkable aromatic polyether ketone.

4. The fuel cell according to Claim 1, wherein the first resin includes a repeating structural unit represented by Formula (1) below and a repeating structural unit represented by Formula (2) below: 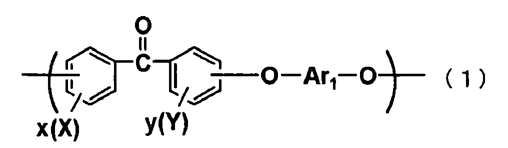 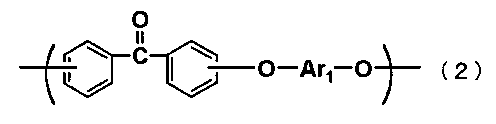 (in Formulae (1) and (2), each Ar₁ independently represents a divalent group containing an aromatic ring; a straight-chain or branched-chain alkyl group having 1 to 20 carbon atoms is directly bonded to at least one of the aromatic rings; a hydrogen of the aromatic ring may be substituted by an alkyl group, a halogenated hydrocarbon group, or a halogen; X and Y each represents a protonic acid group selected from a sulfonic acid group, a carboxylic acid group, a phosphoric acid group, or a sulfonimide group, or a metal salt thereof; x and y are integers of 0 or higher; and x + y is 1 or higher).

5. The fuel cell according to Claim 1, wherein the intermediate layer further comprises the second resin.

6. The fuel cell according to Claim 1, wherein the second resin comprises a sulfonic acid group-containing perfluorocarbon polymer compound.

7. The fuel cell according to Claim 1, wherein the third resin content of the intermediate layer on a side that is in contact with the polymer electrolyte membrane is higher than the third resin content of the intermediate layer on a side that is in contact with the diffusion electrode.

8. The fuel cell according to Claim 1, wherein the catalyst particles contained in the intermediate layer comprise conductive particles and a metal catalyst supported on the conductive particles.

9. The fuel cell according to Claim 1, wherein methanol fuel is supplied to one of the diffusion electrodes.

10. A fuel cell comprising:
a polymer electrolyte membrane; and
a pair of diffusion electrodes sandwiching the polymer electrolyte membrane;
wherein the polymer electrolyte membrane comprising a first resin;
the diffusion electrode comprising a porous base member and a catalyst layer, the catalyst layer being formed so as to be in contact with the porous base member, and the catalyst layer comprising a catalyst and a second resin having a protonic acid group;
an intermediate layer being provided between the polymer electrolyte membrane and at least one of the diffusion electrodes, the intermediate layer comprising a third resin and catalyst particles; and
the third resin comprising a protonic acid group-containing aromatic polyether ketone.

11. The fuel cell according to Claim 10, wherein the third resin is a crosslinkable resin.

12. The fuel cell according to Claim 10, wherein the third resin is a crosslinked resin.

13. A fuel cell comprising:
a polymer electrolyte membrane; and
a pair of diffusion electrodes sandwiching the polymer electrolyte membrane;
wherein the polymer electrolyte membrane comprising a first resin;
the diffusion electrode comprising a porous base member and a catalyst layer, the catalyst layer being formed so as to be in contact with the porous base member, and the catalyst layer comprising a catalyst and a second resin having a protonic acid group;
an intermediate layer being provided between the polymer electrolyte membrane and at least one of the diffusion electrodes, the intermediate layer comprising a third resin and catalyst particles; and
the first resin being a resin formed by crosslinking a protonic acid group-containing crosslinkable aromatic polyether ketone.

14. The fuel cell according to Claim 13, wherein the first resin includes a repeating structural unit represented by Formula (1) below and a repeating structural unit represented by Formula (2) below 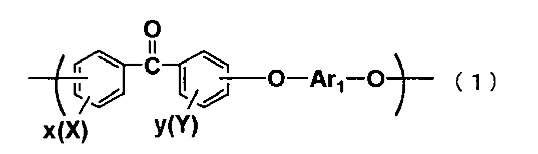 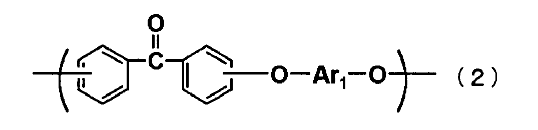 (in Formulae (1) and (2), each Ar₁ independently represents a divalent group containing an aromatic ring; a straight-chain or branched-chain alkyl group having 1 to 20 carbon atoms is directly bonded to at least one of the aromatic rings; a hydrogen of the aromatic ring may be substituted by an alkyl group, a halogenated hydrocarbon group, or a halogen; X and Y each represents a protonic acid group selected from a sulfonic acid group, a carboxylic acid group, a phosphoric acid group, or a sulfonimide group, or a metal salt thereof; x and y are integers of 0 or higher; and x + y is 1 or higher).

15. A method for manufacturing a fuel cell, the method comprising:
a step of arranging, on opposite surfaces of a polymer electrolyte membrane comprising a first resin, a pair of diffusion electrodes comprising a porous base member and a catalyst layer, the catalyst layer being formed so as to be in contact with the porous base member, and the catalyst layer comprising a catalyst and a second resin having a protonic acid group and applying pressure or heat in this state so as to unite the diffusion electrodes and the polymer electrolyte membrane,
wherein, prior to the above-mentioned step, at least one surface of the polymer electrolyte membrane is coated with a coating solution comprising catalyst particles and a third resin comprising a protonic acid group-containing crosslinkable aromatic polyether ketone.

16. The method for manufacturing a fuel cell according to Claim 15, wherein, after coating with the coating solution, the third resin is crosslinked by heating or by irradiation with electromagnetic waves.

17. The method for manufacturing a fuel cell according to Claim 15, wherein the third resin comprises a repeating structural unit represented by Formula (1) below and a repeating structural unit represented by Formula (2) below 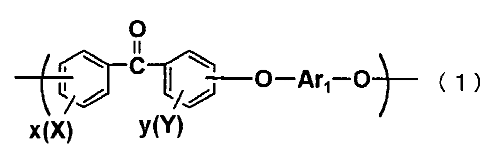 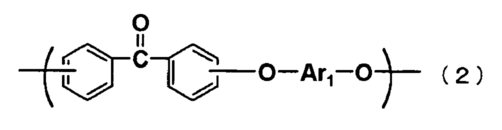 (in Formulae (1) and (2), each Ar₁ independently denotes a divalent group containing an aromatic ring; a straight-chain or branched-chain alkyl group having 1 to 20 carbons is directly bonded to at least one of the aromatic rings; a hydrogen of the aromatic ring may be replaced by an alkyl group, a halogenated hydrocarbon group, or a halogen; X and Y each denote a protonic acid group selected from a sulfonic acid group, a carboxylic acid group, a phosphoric acid group, or a sulfonimide group, or a metal salt thereof; x and y are integers of 0 or higher; and x + y is 1 or higher).

18. The method for manufacturing a fuel cell according to Claim 15, wherein the coating solution comprises the second resin.

19. The method for manufacturing a fuel cell according to Claim 15, wherein the second resin comprises a sulfonic acid group-containing perfluorocarbon polymer compound.

20. The method for manufacturing a fuel cell according to Claim 15, wherein the step of applying the coating solution comprises a step of applying a plurality of coating solutions having different contents of the third resin.

21. The method for manufacturing a fuel cell according to Claim 15, wherein the catalyst particles contained in the intermediate layer comprise conductive particles and a metal catalyst supported on the conductive particles.
